# EUROPÄISCHE PATENTSCHRIFT

(11) **EP 1 726 209 B1**
(45) Veröffentlichungstag und Bekanntmachung des Hinweises auf die Patenterteilung: **13.11.2013**
(21) Anmeldenummer: 06114442.4
(22) Anmeldetag: 23.05.2006
(51) Int. Cl.: A21C 9/06

(54) **Wickelsystem für Teigstücke und Füllgut**
System for coiling dough pieces and filling material.
Système d'enroulement pour des pièces de pâte et de matériau de remplissage

(30) Priorität: 23.05.2005 EP 05104323
(43) Veröffentlichungstag der Anmeldung: 29.11.2006
(73) Patentinhaber: Fritsch GmbH, 97348 Markt Einersheim (DE)
(72) Erfinder: Udo Bernhardt, DE-97346 Iphofen (DE)
(74) Vertreter: Götz, Georg Alois

(56) Entgegenhaltungen:
- EP-A1- 0 204 490
- DE-B- 1 138 002
- DE-T2- 69 804 709
- FR-A1- 2 428 403
- FR-A1- 2 585 613
- GB-A- 1 037 870

## Beschreibung

Die Erfindung betrifft ein Verfahren zum Wickeln von Teigstücken mit Füllgut, indem das Teigstück auf einer maschinell angetriebenen oder antreibbaren Transportunterlage, wie z. B. Förderband oder Fördertisch, flach abgelegt, mit dem Füllgut auf seiner Oberseite versehen und mittels der Transport-Unterlage durch eine Wickelpassage geführt wird. Darin wird das Teigstück aufgerollt und um das Füllgut gewickelt. Weiter betrifft die Erfindung eine Wickelvorrichtung zur Durchführung dieses Verfahrens, bei der in der Förderrichtung der Transportunterlage vor der Wickelpassage eine Andrückpassage angeordnet ist, die mit der Transportunterlage und einer gegenüberliegenden Andrückeinrichtung zusammenwirkt.

Aus US-A-5 078 585 ist eine Vorrichtung zur Produktion aufgerollter Teiglinge aus einem flachen Teigstück bekannt. Vor dem eigentlichen Aufwickeldurchgang ist eine Haltewalze vorgesehen, welche das Teigstück gegen eine Förderband-Unterlage hält. Der Umfang der Haltewalze berührt die Teigstück-Oberfläche direkt. In Förderrichtung ist der Haltewalze noch eine kleinere Walze über der Oberseite des Teigstücks nachgeordnet. Sie wird mit höherer Umfangsgeschwindigkeit als die vorgeordnete, größere Haltewalze angetrieben und dient dazu, das Ablösen des Teigstücks von der Haltewalze zu erleichtern. Das Einwickeln von stückigem Füllgut ist wegen der unmittelbar auf die Teigstück-Oberseite aufsetzenden Haltewalze nicht ermöglicht.

Nach US-A-4 313 719 wird ein Riemenförderer mit flach abgelegten, pfannkuchenartigen Teigstücken, auf deren Oberseiten Füllungen aufgebracht sind, gegen einen zweiten Riemenförderer gefahren, um das Teigstück mit der Füllung aufzuwickeln. Der zweite Riemenförderer quert dazu den ersten Riemenförderer in einem spitzen Winkel, wobei die beabstandeten Riemen beider Riemenförderer einander "Lücke auf Lücke" durchsetzen. Da der zweite, schräg nach oben vorspringende Riemenförderer mit seiner Förderrichtung einen schrägen Winkel mit der Förderrichtung des ersten, horizontalen Riemenförderers bildet, wird den Pfannkuchen-Teigstücken während des Aufwickelns eine Bewegungskomponente quer oder schräg zur letztgenannten Förderrichtung erteilt, so dass die Teigstücke im aufgewickelten Zustand an den zweiten, schräg erhabenen Riemenförderer vorbei bewegt werden und zur nächsten Bearbeitungsstation gelangen können.

Zur Herstellung gefüllter Teigstücke wie Croissants ist es aus WO-A-01/41 574 bekannt, eine Wickelstation einzusetzen, bei der obere Andruckmittel in Form eines Endlos-Riemenförderers aus flexiblem Material über eine Tragwalze für Teigstücke angeordnet sind. Die Andrückfunktion und die Wickelfunktion sind dabei baulich ineinander integriert. Dazu ist eine extra verstellbare Druckwalze vorgesehen, welche die flexiblen Riemen des Riemenförderers gegen das im Wickelprozess befindliche Teigstück drückt. Weiter ist eine Gabeleinrichtung vorgesehen, um nach Vollendung des Wickelprozesses das Teigstück aus einer Wickelmulde unterhalb des Riemenförderers auf einen Ausgangsförderer zu heben. Notwendig ist eine Steuerungseinrichtung mit nachgeordneter Verstelleinrichtung für die Druckwalze und die Auswurfgabel, um deren Bewegungsabläufe zeitgerecht zu kontrollieren und zu koordinieren.

Das Verschmutzen von Aufrollbändern und sonstigen Maschinenkomponenten mit etwa freigelegter Füllung gewickelter Teiglinge soll auch bei einer Vorrichtung zum Herstellen von Hörnchen mit Füllungen nach EP-B-0 551 177 verhindert werden. Dazu ist eine das (spätere) Aufrollen vorbereitende Einrichtung vorgesehen, die aus einem Förderer mit Endlosriemen besteht, welche aus der eigentlichen, horizontalen Förderfläche durch dortige Förderriemenlücken bzw. -abstände herausschwenkbar ist. Dabei kann ein spitzer Winkel zwischen der horizontalen Riemen-Förderfläche und dem herausschwenkbaren Riemenförderer gebildet werden, wobei für das Teigstück mit Füllung darauf ein vorbereitender Aufrollschritt stattfindet. Danach wird der schwenkbare Riemenförderer wieder unterhalb der eigentlichen Teigstückförderfläche versenkt, und das vorbereitete Teigstück wird einer eigentlichen Aufrolleinrichtung zugeführt, bei der die Vorgänge des Drückens und Aufrollens gleichzeitig ausgeführt werden. Für den schwenkbaren Riemenförderer ist eine Zeitsteuerung mit Stelleinrichtung notwendig, was das sensorische Erfassen ankommender Teigstücke mit Füllung darauf notwendig macht.

In der DE 698 04 709 T2 ist ein Verfahren mit allen Merkmalen des Oberbegriffs des Anspruchs 1 sowie eine Vorrichtung zum erfolgreichen Aufrollen eines Teigblattes mit darauf platzierten festen Stücken mit allen Merkmalen des Oberbegriffs des Anspruchs 8 offenbart. Dazu ist eine Aufrollrolle, die aus mehreren Rollenelementen zusammengesetzt ist, oberhalb des Förderers positioniert und so angeordnet, dass sie sich in die entgegengesetzte Richtung zur Förderrichtung des Förderers dreht. Jedes Rollenelement der Aufrollrolle ist getrennt voneinander auf- und abbewegbar. Dadurch wird das Teigstück auch mit darauf platzierten festen Füllungen während des Aufrollens und der Förderung mittels des Förderers ausreichend gehalten, so dass eine erfolgreiche Aufrollung gewährleistet werden kann.

Zum weiteren Stand der Technik wird noch auf DE-C-24 35 110, EP-A-327 856, DE 11 38 002 B und EP 0 204 490 A1 verwiesen.

Der Erfindung liegt die Aufgabe zugrunde, bei einem Wickelsystem für Teigstücke mit Füllung die Betriebszuverlässigkeit zu erhöhen sowie Aufbau, Konstruktion und Bewegungsabläufe zu vereinfachen. Zur Lösung werden das im Patentanspruch 1 angegebene Verfahren sowie die im Patentanspruch 8 angegebene Wickelvorrichtung vorgeschlagen. Optionale Erfindungsausgestaltungen ergeben sich aus den abhängigen Ansprüchen und der nachfolgenden Beschreibung.

Die Erfindung geht von der Verwendung von Füllgut oder Füllgutstücken fester und/oder bestimmter bzw. definierter Form aus, welche sich in die Teigstückoberfläche eindrücken lassen. Erfindungsgemäß ist dazu die Verwendung einer Andrückeinrichtung vor dem Wickeln vorgesehen. Damit lässt sich das Füllgut oder Füllstück in die Teigoberfläche einpressen und so örtlich auf dem Teigstück fixieren. Dies wirkt sich vorteilhaft auf die Genauigkeit und Stabilität des späteren Wickelvorgangs aus. Die Andrückeinrichtung lässt sich gerätetechnisch relativ einfach realisieren, wie nachstehend noch erläutert.

Bevorzugt werden für das erfindungsgemäße Verfahren Füllgutstücke verwendet, welche eine rundliche oder ovale Grundform, auch rundlich-zylindrische Grundform, aufweisen. Beispielsweise lassen sich Würstchen als Füllgut verwenden, welche noch etwas über den Rand des flach ausgelegten Teigstücks hinausstehen können (so genannte "Würstchen im Schlafrock"). Eine vorteilhafte Ausbildung der Erfindung besteht darin, das Teigstück vor dem Aufsetzen des stückigen Füllguts leicht mit Flüssigkeit bzw. Feuchtigkeit zu benetzen. Dadurch lässt sich eine bessere Haftung zwischen Füllgut und Teigstück erzielen.

Damit das Füllgut möglichst in der Hälfte oder in dem (Rand-) Bereich des Teigstücks verbleibt, welche in der Förderrichtung der Transportunterlage der anderen Hälfte bzw. den anderen Bereichen des Teigstücks vorauseilen, ist es zweckmäßig, das Füllgut und das Teigstück in unveränderter Relativlage zueinander zu halten. Dazu wird das Füllgut zusammen mit dem Teigstück an der Andruckeinrichtung vorbeibewegt. In weiterer Ausgestaltung dieses Gedankens wird die Andrückeinrichtung absolut ortsfest gehalten, also nicht verfahren, was insbesondere eine baulich konstruktive Vereinfachung mit sich bringt: Steuerungen von Bewegungsabläufen sind nicht notwendig.

Um die Relativlage zwischen Teigstück und Füllgut in einfacher Weise konstant halten zu können, ist nach einer erfindungsgemäßen Verfahrensausbildung vorgesehen, die Andrückeinrichtung mit einer Bewegungskomponente zu versehen, welche der Förderbewegung der Transportunterlage entspricht. In konkreterer Realisierung dieses Gedankens wird eine der Transportunterlage gegenüberliegend angeordnete Fördereinrichtung verwendet, welche mit gleicher Geschwindigkeit bzw. gleicher Richtung läuft. Das Füllgut auf dem Teigstück wird in reibschlüssiger Anlage an der Fördereinrichtung gehalten, während das Teigstück reibschlüssig auf der Transportunterlage liegt und von dieser mitgenommen wird.

Die erfindungsgemäße Wickelvorrichtung zeichnet sich dadurch aus, dass die Andrückeinrichtung zum Drücken oder Pressen des Füllguts direkt auf oder in die Oberseite des Teigstücks auf der Transportunterlage ausgebildet ist. Dazu ist es zweckmäßig, dass ein Abstand zwischen Transportunterlage und Andrückeinrichtung in einem solchen Ausmaß besteht, dass das Füllgut gepresst wird, ohne beschädigt zu werden. Des Weiteren sind die Andrück- und Wickelpassage jeweils mit einem Bandförderer oder einem Riemenförderer letzterer mit nebeneinander im Abstand verlaufenden Endlos-Riemen, realisiert. Den Band- oder Riemenförderer ist jeweils ein eigener Antriebsmotor zur Realisierung unterschiedlicher Fördergeschwindigkeiten zugeordnet.

Zur Realisierung der oben angesprochenen Bewegungskomponente bei der Andrückeinrichtung ist der Einsatz einer elastischen Fördereinrichtung in Kombination mit einem Druck- oder Stützelement zweckmäßig. Letzteres kann auf die Fördereinrichtung derart einwirken, dass ein konstanter Abstand der Andrückeinrichtung insgesamt gegenüber der Transportunterlage eingehalten wird.

Eine zweckmäßige, weil gerätetechnisch besonders einfache Ausbildung besteht in der Realisierung des Druck- oder Stützelements als steife, in Förderrichtung lang gestreckte Leiste oder Platte, die am Maschinenrahmen fixiert ist und parallel zur Fördereinrichtung verläuft. Diese ist besonders geeignet, von innen die Fördereinrichtung gegen das Füllgut zu drücken bzw. zu halten.

Um einen kontinuierlichen, kontrollierten Übergang des Teigstücks mit Füllgut von der Andrück- in die Wickelphase zu gewährleisten, besteht eine Erfindungsausbildung darin, dass die Wickelpassage unmittelbar im Anschluss an die Andrückpassage angeordnet ist. Der kontinuierliche Übergang der Andrück- in die Wickelphase wird auch mit einer Ausbildung der Erfindung gefördert, wonach sich die Transportunterlage als eine einheitliche Bau- und Funktionskomponente sowohl in die Andrückpassage als auch in die Wickelpassage erstreckt. Ferner ist es für den kontinuierlichen Übergang von der Andrück- in die Wickelpassage nützlich, wenn nach einer Erfindungsausbildung beide mit jeweils einem Riemenförderer realisiert sind. Der Wickel-Riemenförderer folgt dabei dem Andrück-Riemenförderer unmittelbar nach. Beiden ist eine Übergangsachse gemeinsam, um welche die Riemen beider aufeinander folgender Riemenförderer "Lücke auf Lücke" geführt sind.

Zur Erhöhung der Einsatzflexibilität sind nach einer Erfindungsausbildung Verstellmittel für den Abstand zwischen der Andrückeinrichtung und/oder dem Wickelförderer einerseits und der Transportunterlage andererseits vorgesehen. Zweckmäßig lassen sich die Verstellmittel als Höheneinstellmittel insbesondere in Form von Zahnstangentriebe realisieren. Auch andere Formen und Höheneinstellmittel wie Spindelhubgetriebe oder sonstige Getriebemittel sowie Exzenterverstellungen liegen im Rahmen der Erfindung.

Zur Erhöhung des Andrückeffekts ist es zweckmäßig, die Andrückpassage mit einer Durchgangsweite zu gestalten, welche sich vom Passageneingang ausgehend mit zunehmender Nähe zum Passagenausgang verengt. Damit ist gewährleistet, dass das Füllgut definierter Form ausreichend fest in die Oberseite des Teigstücks hineingedrückt wird. Dadurch wird eine zuverlässige Haftung zwischen Teigstückoberseite und Füllgut gewährleistet, so dass in der nachfolgenden Wickelpassage das Anreißen bzw. Hochstellen der in Förderrichtung vorauseilenden Teigstückseite sichergestellt ist. Etwaige zusätzliche, an sich bekannte Teigrand-Anreißeinrichtungen (vgl. z. B. WO 86/02808, WO 99/49736 sowie ältere nachveröffentlichte, europäische Patentanmeldungen des gleichen Anmelders ) erbrächten nur noch Unterstützungsfunktion und können grundsätzlich entfallen.

Nach einer anderen Erfindungsausbildung verläuft der Wickelförderer zur Realisierung der Wickelpassage ebenfalls schräg gegenüber der Transportunterlage. Dabei ist es besonders zweckmäßig, dass sich die Durchgangs- bzw. Kanalweite der Wickelpassage ausgehend vom Eingang mit zunehmender Nähe zum Ausgang immer mehr erweitert, um dem naturgemäß zunehmenden Aufroll- bzw. Aufwickeldurchmesser des Teigstücks Rechnung zu tragen. Dadurch lässt sich eine schonende Teigbearbeitung erzielen.

Weitere Einzelheiten, Merkmale, Merkmalskombinationen, Vorteile und Wirkungen auf der Basis der Erfindung ergeben sich aus der nachfolgenden Beschreibung bevorzugter Ausführungsbeispiele der Erfindung und aus den Zeichnungen. Diese zeigen in jeweils schematischer Darstellung:
- Figur 1: die Wickelvorrichtung in Seitenansicht,
- Figur 2: die Wickelvorrichtung in Draufsicht,
- Figur 3: einzelne Teigstück-Bearbeitungsstufen in der Draufsicht,
- Figur 4: die Wickelvorrichtung in Seitenansicht mit einem Ausführungsbeispiel für die Höhenverstellung,
- Figur 5: die Wickelvorrichtung gemäß Figur 4 in Draufsicht.

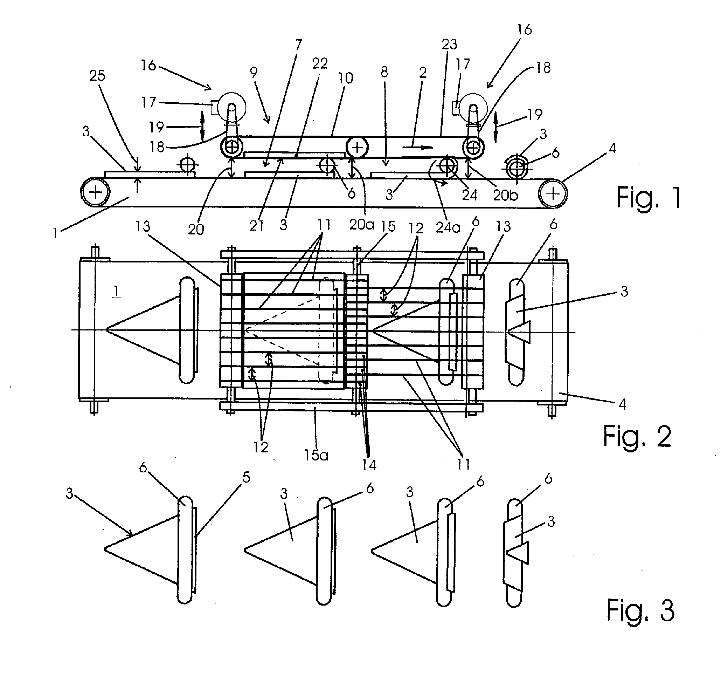

Gemäß Figuren 1-3 werden auf einer Transportunterlage 1, beispielsweise einem Bandförderer, in Förderrichtung 2 einzelne Teigstücke 3 zum stromabwärtigen Ende bzw. Ausgang 4 der Transportunterlage 1 befördert. Die Teigstücke 3 haben zumindest noch in der ersten Hälfte der Transportunterlage 1 im flach ausgelegten Zustand eine im Wesentlichen gleichschenklige Dreieck-Grundform. Im Randbereich der Dreieckbasis 5 ist ein Wurststück mit rundlich-zylindrischer Grundform als Füllgut 6 abgelegt, zur Dreieckbasis 5 etwa parallel verlaufend.

Die Transportunterlage 1 begrenzt jeweils eine Seite einer Andrückpassage 7 und einer unmittelbar nachfolgenden Wickelpassage 8. Die Andrückpassage 7 wird auf der der Transportunterlage 1 gegenüberliegenden Seite von einer Andrückeinrichtung 9 begrenzt. Diese umfasst eine elastische Fördereinrichtung 10 in Form eines Riemenförderers mit einzelnen, nebeneinander in Förderrichtung 2 verlaufenden Teigstück-Mitnehmerriemen 11. Diese weisen jeweils zwischen sich einen Abstand 12 auf und sind eingangsseitig um eine Antriebs- und Umlenkrolle 13 und im Ausgangsbereich der Andrückpassage 7 um einzelne Umlenk- und Führungsscheiben 14 geführt. Letztere sind freilaufend auf einer zweckmäßig stillgehaltenen Übergangsachse 15 drehbar gelagert, beispielsweise mittels nicht gezeichneter Kugellager. Die Übergangsachse 15 ist feststehend in einem stationären Maschinenrahmen 15a angebracht. Die Antriebs- und Umlenkrolle 13 ist mit einer ersten Antriebseinrichtung 16, beispielsweise einem Elektromotor 17 mit Riementrieb 18 gekoppelt. Der Elektromotor 17 der Antriebseinrichtung 16 wird etwa auf die gleiche Fördergeschwindigkeit wie die der Transportunterlage 1 eingestellt, damit die Relativlage zwischen dem Füllgut 6 und dem dieses tragenden Teigstück 3 unverändert bleibt, d. h., dass das Füllgut möglichst im basisseitigen Randbereich 5 des gleichschenklig-dreieckigen Teigstücks 3 gehalten wird. Zweckmäßig ist die Fördereinrichtung 10 außerdem noch mit Mitteln zur Höhenverstellung 19 versehen, um den Abstand 20 zwischen der Fördereinrichtung 10 und der Transportunterlage 1 an die jeweilige Teigstückstärke und/oder an die Abmessungen des Füllguts 6 anpassen zu können. Insbesondere wenn an den Antriebs- und Umlenkrollen 13 und den damit gekoppelten Antriebseinrichtungen 16 sowohl am Eingang der Andrückpassage 7 als auch am Ausgang der Wickelpassage 8 je eine eigens zugeordnete Höhenverstelleinrichtung 19 angreift, lässt sich der ersten, elastischen Fördereinrichtung 10 der Andrückpassage 7 und der zweiten Fördereinrichtung, nämlich dem Wickelförderer 23 je ein Schrägverlauf gegenüber der (gemeinsamen) Transportunterlage 1 erteilen. Bei der Andrückpassage 7 kann der Schrägverlauf derart sein, dass der am Eingang der Andrückpassage 7 zwischen der ersten Fördereinrichtung 10 und der Transportunterlage 1 vorherrschende Abstand 20 sich mit zunehmender Nähe zum Ausgang der Andrückpassage 7 mehr und mehr verkleinert bis zum kleinsten Abstand 20a. Umgekehrt analog nimmt bei der Wickelpassage 8 der minimale Abstand 20a mehr und mehr zu bis zum maximalen Abstand 20b am Ausgang der Wickelpassage 8.

Derjenige untere Abschnitt 21 der ersten Fördereinrichtung 10 zwischen der Antriebs- und Umlenkrolle 13 und der Übergangsachse 15, welcher untere Andrück-Abschnitt 21 der Transportunterlage 1 unmittelbar gegenüberliegt, wird von einer Stützplatte 22, die vorzugsweise stationär bzw. ortsfest beispielsweise am Maschinenrahmen 15a befestigt ist, in konstantem Abstand 20 zur Transportunterlage 1 gehalten. Dazu liegt die Stützplatte 22 an der der Transportunterlage 1 abgewandten Seite des unteren Andrück-Abschnitts 21 an, wobei ein Vorbeigleiten des unteren Andrück-Abschnitts 21 der Fördereinrichtung 10 an der Unterseite der Stützplatte 22 möglich ist.

Zur Bildung der Wickelpassage 8 wird ebenfalls die Transportunterlage 1 sowie in gegenüberliegender Anordnung eine zweite, elastische Fördereinrichtung 23 gleicher Art wie die oben beschriebene Andrück-Fördereinrichtung 10 verwendet. Die mit der Antriebseinrichtung 16 gekoppelte Antriebs- und Umlenkrolle 13 ist im Ausgangsbereich der Wickelpassage 8, und nicht im Eingangsbereich wie bei der Andrückpassage 7 angeordnet. Die Geschwindigkeit des Elektromotors 17 für die zweite bzw. Wickel-Fördereinrichtung 23 ist so eingestellt, dass deren Mitnehmerriemen 11 in Förderrichtung 2 mit langsamerer Geschwindigkeit angetrieben sind, als das Förderband oder der Transportgurt der Transportunterlage 1. Dadurch ergibt sich für das Füllgut 6 eine Drehbewegung 24a um ihre Eigenachse 24 und, damit verbunden, ein Umwickeln des Füllguts 6 mit dem in Förderrichtung 2 hinteren Bereich des Teigstücks 3. Die zeichnerisch nur angedeutete Höhenverstellbarkeit 19 für die zweite Wickel-Fördereinrichtung 23 kann entfallen, wenn die Elastizität der Mitnehmerriemen 11 der Wickel-Fördereinrichtung 23 derart ist, dass die beim Aufwickeln erfolgende Durchmesservergrößerung der Teigstücke 3 durch eine entsprechende Auslenkung der Riemen 11 kompensiert wird.

Im Eingangsbereich der Wickelpassage 8, wo die Führungsscheiben 14 für die Teigriemen 11 auf der Übergangsachse 15 freilaufend gelagert sind, verlaufen die Mitnehmerriemen 11 der zweiten Wickel-Fördereinrichtung 23 um die Übergangsachse 15 jeweils in einer Lücke entsprechend den Riemenabständen 12 zwischen jeweils zwei Mitnehmerriemen 11 der ersten Andrück-Fördereinrichtung 10. Dabei umfassen Sie eigens zugeordnete Führungsscheiben 14, die immer zwischen zwei Führungsscheiben 14 angeordnet sind, welche von Mitnehmerriemen 11 der ersten bzw. Andrück-Fördereinrichtung 10 umfasst sind. Damit die einzelnen, benachbarten Führungsscheiben 14 unabhängig voneinander in entgegengesetzten Drehrichtungen laufen können, ist zweckmäßig ein jeweiliger Spalt zwischen zwei Führungsscheiben 14 vorgesehen (nicht gezeichnet).

Zur Wirkungs- und Verfahrensweise beim erfindungsgemäßen Wickelsystem sei noch folgendes ausgeführt: Das Füllgut 6 wird möglichst nahe bei der in Förderrichtung 2 vorauseilenden Dreiecksbasis 5 des gleichschenkligen Teigstückdreiecks 3 aufgelegt. In der Andrückpassage 7 erfolgt vor allem mittels der Stützplatte 22 ein Andrücken des Füllguts auf und in die Teigstückoberseite, wodurch ein gewisses Fixieren des Füllguts 6 in und entgegen der Förderrichtung 2 erreicht wird. Dieser Effekt lässt sich noch durch vorheriges Benetzen der Teigstück-Oberseite mit Flüssigkeit fördern. Dann erfolgt mittels des stetigen Fördereffekts der Transportunterlage 1 eine gleichsam nahtlose Überleitung des noch flach ausgelegten Teigstücks 3 mit Füllgut 6 darauf in die Wickelpassage 8. Diese gleichmäßige Überleitung wird durch das Überlappen des ersten Andrückförderers 10 mit dem zweiten Wickelförderer 23 verstärkt, was sich daraus ergibt, dass die einzelnen Führungsscheiben 14 auf der Übergangsachse 15 abwechselnd von einem Mitnehmerriemen 11 der Andrückfördereinrichtung 10 und von einem Mitnehmerriemen 11 der Wickelfördereinrichtung 23 koaxial umfasst sind. Durch die Differenzgeschwindigkeit zwischen dem Wickelförderer 23 und der Transportunterlage 1 ergibt sich die bereits oben angesprochene Drehbewegung des Füllguts 6 um seine Eigenachse 24 nebst seiner Umwicklung mit dem Teigstück 3. Das fertig gewickelte Endprodukt (siehe Figur 1-3 jeweils rechts) wird dann weiter in den Ausgangsbereich 4 der Transportunterlage 1 befördert, von wo aus das fertig gewickelte Teigprodukt zur Weiterverarbeitung oder zum Weitertransport entnommen werden kann.

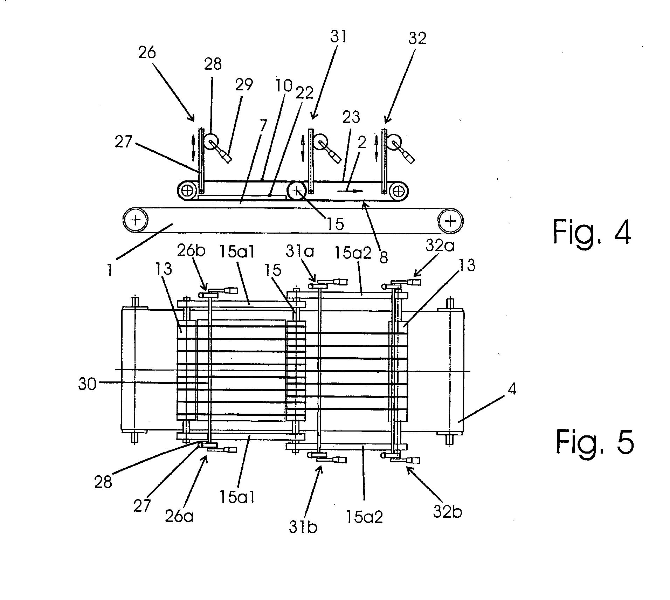

Gemäß Figuren 4 und 5, wo die jeweilige Antriebseinrichtung 16 der Übersichtlichkeit halber nicht gezeichnet ist, wird zur drehbaren Lagerung der Antriebswellen 13 und zur fixen Halterung der Übergangsachse 15 ein mehrteiliger Maschinenrahmen eingesetzt, bestehend aus den einzelnen, gegeneinander um die Übergangsachse 15 verschwenkbaren Maschinenrahmenteilen 15a1 und 15a2. Der in Förderrichtung 2 erste Maschinenrahmenteil 15a1 ist der elastischen Fördereinrichtung 10 für die Andrückpassage 7 und in Förderrichtung 2 der zweite Maschinenrahmenteil 15a2 dem Wickelförderer 23 für die Wickelpassage 8 zugeordnet. Am ersten Maschinenrahmenteil 15a1 greift beidseits je ein Zahnstangentrieb 26a, 26b an. Dieser besteht aus einer Zahnstange 27, die am unteren Ende am zugeordneten Maschinenrahmenteil 15a1 befestigt ist und im oberen Bereich mit einem Zahnrad 28 kämmt bzw. in Eingriff steht, das manuell über eine Handhabe 29 oder dergleichen antreibbar ist Die beiden Zahnräder 28 paarweise einander zugeordneter Zahnstangentriebe 26a, 26b sind miteinander über eine gemeinsame Querwelle 30 gekoppelt. Im Eingangsbereich der Wickelpassage 8 greift am zweiten Maschinenrahmenteil 15a2 ein zweites Zahnstangentriebpaar 31a, 31b an, das mit derselben Struktur wie das erste aufgebaut ist. Entsprechendes gilt für das in Förderrichtung 2 dritte bzw. letzte Zahnstangentriebpaar 32a, 32b.

### Bezugszeichenliste

- 1: Transportunterlage
- 2: Förderrichtung
- 3: Teigstück
- 4: Ausgang
- 5: Dreieck-Basis
- 6: Füllgut
- 7: Andrückpassage
- 8: Wickelpassage
- 9: Andrückeinrichtung
- 10: elastische Fördereinrichtung
- 11: Mitnehmerriemen
- 12: Abstand
- 13: Antriebs- und Umlenkrolle
- 14: Führungsscheiben
- 15: Übergangsachse
- 15a: Maschinenrahmen
- 16: Antriebseinrichtung
- 17: Elektromotor
- 18: Riementrieb
- 19: Höhenverstellbarkeit
- 20: Abstand
- 20a: minimaler Abstand
- 20b: maximaler Abstand
- 21: unterer Andrück-Abschnitt
- 22: Stützplatte
- 23: zweite bzw. Wickel-Fördereinrichtung
- 24a: Drehbewegung
- 24: Eigenachse
- 25: Teigstück-Dicke
- 26a, 26b: erstes Zahnstangentrieb-Paar
- 27: Zahnstange
- 28: Zahnrad
- 29: Handhabe
- 30: Querwelle
- 31 a, 31 b: zweites, mittleres Zahnstangentrieb-Paar
- 32a, 32b: drittes, letztes Zahnstangentrieb-Paar

## Patentansprüche

1. Verfahren zum Wickeln von Teigstücken (3) mit Füllgut (6), indem das Teigstück (3) auf einer maschinell angetriebenen oder antreibbaren Transportunterlage (1) flach abgelegt, mit dem Füllgut (6) auf seiner Oberseite versehen und mittels der Transport-Unterlage (1) durch eine Wickelpassage (8) geführt wird, worin das Teigstück (3) aufgerollt und um das Füllgut (6) gewickelt wird, wobei ein Füllgut (6) fester und/oder bestimmter Form verwendet wird, **dadurch gekennzeichnet, dass** das Füllgut (6) vor der Wickelpassage (8) mittels einer Andrückeinrichtung (9) direkt auf die Oberseite des Teigstücks (3) gedrückt und/oder darin direkt eingedrückt wird.

2. Verfahren nach Anspruch 1, **gekennzeichnet durch** die Verwendung eines Füllguts (6) mit einer rundlichen oder ovalen Grundform.

3. Verfahren nach Ansprüche 1 oder 2, **dadurch gekennzeichnet, dass** das Füllgut (6) in der Hälfte oder in dem Randbereich (5) des Teigstücks aufgelegt wird, der in Transportrichtung (2) den anderen Randbereichen oder der anderen Hälfte des Teigstücks (3) vorauseilt.

4. Verfahren nach einem der vorangehenden Ansprüche, **dadurch gekennzeichnet, dass** vor dem Auflegen des Füllguts (6) auf die Oberseite des Teigstücks (3) diese Oberseite mit Feuchtigkeit oder Flüssigkeit benetzt wird.

5. Verfahren nach einem der vorangehenden Ansprüche, **dadurch gekennzeichnet, dass** das Teigstück (3) mit dem Füllgut (6) an der Andrückeinrichtung (9) mittels der Transportunterlage (1) vorbeibewegt wird, wobei das Füllgut (6) und das Teigstück (3) in unveränderter Relativlage zueinander gehalten werden.

6. Verfahren nach Anspruch 5, **dadurch gekennzeichnet, dass** die Andrückeinrichtung (9) ortsfest gehalten wird.

7. Verfahren nach einem der vorangehenden Ansprüche, **gekennzeichnet durch** die Verwendung einer der Transportunterlage (1) gegenüber liegend angeordneten Andrück-Fördereinrichtung (10) etwa gleicher Geschwindigkeit, an welchen beiden das Teigstück (3) beziehungsweise das darauf liegende Füllgut (6) jeweils in reibschlüssiger Anlage gehalten werden, wobei die Andrück-Fördereinrichtung (10) mittels der Andrückeinrichtung gegen das Füllgut gedrückt wird.

8. Wickelvorrichtung für Teigstücke (3) mit Füllgut (6) fester und/oder bestimmter Form, zur Durchführung des Verfahrens nach einem der vorangehenden Ansprüche, mit einer Transportunterlage (1), insbesondere Förderband oder -tisch, zum Fördern der Teigstücke (3) zu einer Wickelpassage (8), wobei in Förderrichtung (2) vor der Wickelpassage (8) eine Andrückpassage (7) angeordnet ist, die mit der Transportunterlage (1) und einer gegenüber liegenden Andrückeinrichtung (9) gebildet ist, wobei die Andrückeinrichtung (9) zum Drücken oder Pressen des Füllguts (6) direkt auf oder in die Oberseite des auf der Transportunterlage (1) liegenden Teigstücks (3) mit einem Abstand (20) zur Transportunterlage (1) angeordnet ist, der entsprechend den Abmessungen des Füllguts und der Teigstück-Dicke (25) bemessen ist, **dadurch gekennzeichnet, dass** die Andrück- und die Wickelpassage (7,8) jeweils mit einem Bandförderer oder einem Riemenförderer, letzterer mit nebeneinander im Abstand verlaufenden Endlos-Riemen (11), realisiert sind, denen zur Realisierung unterschiedlicher Fördergeschwindigkeiten jeweils ein eigener Antriebsmotor (16,17) zugeordnet ist.

9. Vorrichtung nach Anspruch 8, **dadurch gekennzeichnet, dass** die Andrückeinrichtung (9) eine elastische Andrück-Fördereinrichtung (10) und ein Druck- oder Stützelement (22) aufweist, welches den Abstand (20) der Andrück-Fördereinrichtung (10) zur gegenüberliegenden Transportunterlage (1) konstant hält.

10. Vorrichtung nach Anspruch 9, **dadurch gekennzeichnet, dass** das Druck- oder Stützelement (22) ortsfest fixiert und/oder in gleitfähiger Anlage an einer der Transportunterlage (1) abgewandten Seite der Andrück-Fördereinrichtung (10) angeordnet ist.

11. Vorrichtung nach Ansprüche 9 oder 10, **dadurch gekennzeichnet, dass** das Druck- oder Stützelement (22) als steife, in Förderrichtung (2) lang gestreckte Leiste oder Platte ausgebildet und parallel zur Andrück-Fördereinrichtung (10) angeordnet ist.

12. Vorrichtung nach einem der Ansprüche 9 bis 11, **dadurch gekennzeichnet, dass** die Andrück-Fördereinrichtung (10) als Endlos-Bandförderer oder mit einer Mehrzahl nebeneinander verlaufender, beabstandeter und elastischer Endlos-Riemen (11) zur Teigmitnahme realisiert ist, welche um ein oder mehrere, teilweise maschinell angetriebene Führungsscheiben (14) und/oder Umlenkrollen (13) geführt sind.

13. Vorrichtung nach Anspruch 12, **dadurch gekennzeichnet, dass** die Andrück-Fördereinrichtung (10) einen zwischen zwei Umlenkelementen (13,14) verlaufenden Andrück-Abschnitt (21) aufweist, der mit seiner Außenseite der Transportunterlage (1) unmittelbar gegenüberliegt, wobei an der Innenseite des Andrück-Abschnitts (21) das Druck- oder Stützelement (22) gleitend oder gleitfähig anliegt.

14. Vorrichtung nach einem der Ansprüche 8 bis 13, **dadurch gekennzeichnet, dass** die Wickelpassage (8) unmittelbar im Anschluss an die Andrückpassage (7) angeordnet ist.

15. Vorrichtung nach einem der Ansprüche 8 bis 14, **dadurch gekennzeichnet, dass** die Andrückpassage (7) kontinuierlich in die Wickelpassage (8) übergeht.

16. Vorrichtung nach einem der Ansprüche 8 bis 15, **dadurch gekennzeichnet, dass** sich die Transportunterlage (1) sowohl in der Andrückpassage (7) als auch in der Wickelpassage (8) erstreckt.

17. Vorrichtung nach einem der Ansprüche 8 bis 16, **dadurch gekennzeichnet, dass** die Band- und/oder Riemenförderer zumindest am Eingang der Andrückpassage (7) und am Ausgang der Wickelpassage (8) für ihre Förderbänder oder -riemen (11) jeweils mit einer Antriebs- und Umlenkrolle (13) versehen sind, die je mit einer unabhängig einstellbaren Antriebseinrichtung (13) gekoppelt sind.

18. Vorrichtung nach einem der Ansprüche 8 bis 17, **dadurch gekennzeichnet, dass** die Andrückpassage (7) und die Wickelpassage (8) mit aufeinander folgenden Riemenförderern realisiert sind, und die Riemen (11) beider aufeinander folgender Riemenförderer jeweils um eine gemeinsame Übergangsachse (15) geführt sind, die im Übergangsbereich zwischen der Andrück- und der Wickelpassage (7,8) angeordnet ist.

19. Vorrichtung nach Anspruch 18, **dadurch gekennzeichnet, dass** auf der Übergangsachse (15) mehrere Führungsscheiben (14) axial hintereinander freilaufend gelagert und je von einem der Endlos-Riemen (11) beider Riemenförderer umfasst sind.

20. Vorrichtung nach Anspruch 19, **dadurch gekennzeichnet, dass** die Führungsscheiben (14) in axialer Richtung abwechselnd von Riemen (11) der Andrückpassage (7) und von Riemen (11) der Wickelpassage (8) umfasst sind.

21. Vorrichtung nach Anspruch 19 oder 20, **dadurch gekennzeichnet, dass** die beiden Führungsscheiben (14), die jeweils ein Ende einer Führungsscheibenreihe auf der Übergangsachse (15) bilden, von je einem Riemen (11) der Andrückpassage (7) umfasst sind.

22. Vorrichtung nach einem der Ansprüche 8 bis 21, **gekennzeichnet durch** Mittel zur Verstellung (19) des Abstands (20,20a,20b) zwischen der Andrückeinrichtung (9) und/oder des Wickelförderers (23) einerseits und der Transportunterlage (1) andererseits.

23. Vorrichtung nach Anspruch 22, **dadurch gekennzeichnet, dass** die Verstellmittel (19) als mit der Andrückeinrichtung (9) und/oder dem Wickelförderer (23) verbundene oder gekoppelte Höheneinstellmittel realisiert sind, wobei die Transportunterlage (1) horizontal und/oder stationär gehalten wird.

24. Vorrichtung nach Anspruch 22 oder 23, **dadurch gekennzeichnet, dass** die Verstellmittel (19) mindestens einen Zahnstangentrieb (26,31,32), ein Spindelhubgetriebe, sonstige Getriebemittel und/oder eine Exzenterverstellung umfassen.

25. Vorrichtung nach Anspruch 24, **dadurch gekennzeichnet, dass** der Zahnstangentrieb (26,31,32) eine Zahnstange (27) aufweist, die einerseits jeweils an einem verstellbaren Maschinenenrahmen (15a) oder an einem jeweils zugeordneten Teil eines mehrteiligen Maschinenrahmens mit gegeneinander verstellbaren Teilen (15a1,15a2) angreifen und anderseits mit einem Zahnrad (28) mit Antriebswelle (30) kämmt, welche mit ortsfest verlaufender Drehachse gelagert ist.

26. Vorrichtung nach Anspruch 25, **dadurch gekennzeichnet, dass** beidseits des Maschinenrahmens (15a,15a1,15a2) zwei Zahnstangentriebe (26a,26b;31 a;31 b; 32a;32b) angeordnet sind, deren Zahnräder (28) durch eine gemeinsame Antriebswelle (30) verbunden sind, welche schräg oder quer über die oder unter der Andrück- oder Wickelpassage (7,8) verläuft.

27. Vorrichtung nach einem der Ansprüche 23 bis 26, **dadurch gekennzeichnet, dass** je einer Antriebswelle (13) und/oder Übergangsachse (15) der Andrück- und/oder Wickelpassage (7,8) eine Höheneinstelleinrichtung (19) und/oder der Andrück- und/oder der Wickelpassage (7,8) je ein beweglicher Teil (15a1,15a2) des Maschinenrahmens (15a) zugeordnet sind.

28. Vorrichtung nach einem der Ansprüche 8 bis 27, **dadurch gekennzeichnet, dass** eine elastische Fördereinrichtung (10) der Andrückpassage (7) und/oder eine Wickel-Fördereinrichtung (23) der Wickelpassage (8) zur Transportunterlage (1) schräg verlaufen.

29. Vorrichtung nach Anspruch 28, **dadurch gekennzeichnet, dass** der Abstand (20,20a) der elastischen Fördereinrichtung mit zunehmender Nähe zum Ausgang der Andrückpassage (7) abnimmt und/oder der Abstand (20a,20b) der Wickel-Fördereinrichtung (23) mit zunehmender Nähe zum Ausgang der Wickelpassage (7) zunimmt.

## Claims

1. A method for winding pieces of dough (3) with a filling material (6), the piece of dough (3) being laid flat on a mechanically driven or driveable conveyance base (1), being provided with the filling material (6) on its upper side and being guided by the conveyance base (1) through a winding passage (8) in which the piece of dough (3) is rolled up and is wound around the filling material (6), a filling material in a solid and/or specified form being used, **characterised in that** the filling material (6) is pressed directly onto the upper side of the piece of dough (3) or is pressed directly into the latter before the winding passage (8) by means of a pressing device (9).

2. The method according to Claim 1, **characterised by** the use of a filling material (6) with a basic form that is round or oval.

3. The method according to Claim 1 or 2, **characterised in that** the filling material (6) is laid in the half or in the peripheral region (5) of the piece of dough which runs ahead of the other peripheral regions or the other half of the piece of dough (3) in the direction of conveyance (2).

4. The method according to any of the preceding claims, **characterised in that** before laying the filling material (6) on the upper side of the piece of dough (3), this upper side is wetted with moisture or liquid.

5. The method according to any of the preceding claims, **characterised in that** the piece of dough (3) with the filling material (6) is moved past the pressing device (9) by the conveyance base (1), the filling material (6) and the piece of dough (3) being held in a position relative to one another that does not change.

6. The method according to Claim 5, **characterised in that** the pressing device (9) is held in a fixed position.

7. The method according to any of the preceding claims, **characterised by** the use of a pressing/conveying device (10) arranged opposite the conveyance base (1) and with approximately the same speed, against both of which the piece of dough (3) and the filling material (6) lying on the latter are respectively held in frictionally engaged contact, the pressing/conveying device (10) being pressed against the filling material by means of the pressing device.

8. A winding apparatus for pieces of dough (3) with a filling material (6) in a solid and/or specified form for implementing the method according to any of the preceding claims, comprising a conveyance base (1), in particular a conveyor belt or table, for conveying the pieces of dough (3) to a winding passage (8), a pressing passage (7) being disposed before the winding passage (8) in the direction of conveyance (2), said pressing passage being formed by the conveyance base (1) and a pressing device (9) lying opposite the latter, the pressing device (9) for pushing or pressing the filling material (6) directly onto or into the upper side of the piece of dough (3) lying on the conveyance base (1) being arranged a distance (20) away from the conveyance base (1) which is measured according to the dimensions of the filling material and the thickness (25) of the piece of dough, **characterised in that** the pressing and winding passages (7,8) are produced respectively with a belt conveyor, the latter having endless belts (11) running next to one another and spaced apart, and to which a particular drive motor (16, 17) is respectively assigned in order to realise different conveying speeds.

9. The apparatus according to Claim 8, **characterised in that** the pressing device (9) has an elastic pressing/conveying device (10) and a pressure or support element (22) which keeps the distance (20) between the pressing/conveying device (10) and the conveyance base (1) lying opposite the latter constant.

10. The apparatus according to Claim 9, **characterised in that** the pressure or support element (22) is fixed in position and/or is arranged with sliding contact against a side of the pressing/conveying device (10) facing away from the conveyance base (1).

11. The apparatus according to Claim 9 or 10, **characterised in that** the pressure or support element (22) is in the form of a rigid bar or plate stretched out in the direction of conveyance (2) and arranged parallel to the pressing/conveying device (10).

12. The apparatus according to any of Claims 9 to 11, **characterised in that** the pressing/conveying device (10) is made as an endless belt conveyor or with a plurality of elastic endless belts (11) running next to one another and spaced apart for taking up the dough and which are guided around one or a number of partially mechanically driven guiding discs (14) and/or deflection rollers (13).

13. The apparatus according to Claim 12, **characterised in that** the pressing/conveying device (10) has a pressing section (21) running between two deflection elements (13, 14) and which lies with its outside directly opposite the conveyance base (1), the pressure or support element (22) resting against the inside of the pressing section (21) such as to slide or to be able to slide.

14. The apparatus according to any of Claims 8 to 13, **characterised in that** the winding passage (8) is disposed directly after the pressing passage (7).

15. The apparatus according to any of Claims 8 to 14, **characterised in that** the pressing passage (7) continuously passes into the winding passage (8).

16. The apparatus according to any of Claims 8 to 15, **characterised in that** the conveyance base (1) extends both within the pressing passage (7) and within the winding passage (8).

17. The apparatus according to any of Claims 8 to 16, **characterised in that** at the very least at the entrance to the pressing passage (7) and at the exit of the winding passage (8) the belt conveyors are respectively provided with a drive and deflection roller (13) for their conveyor belts (11) which are respectively coupled to an independently adjustable drive device (13).

18. The apparatus according to any of Claims 8 to 17, **characterised in that** the pressing passage (7) and the winding passage (8) are made with consecutive belt conveyors and the belts (11) of both consecutive belt conveyors are respectively guided around a common cross-over axis (15) which is disposed in the cross-over region between the pressing and the winding passage (7, 8).

19. The apparatus according to Claim 18, **characterised in that** a number of guiding discs (14) are mounted on the cross-over axis (15) such as to run freely axially one behind the other and each being surrounded by one of the endless belts (11) of the two belt conveyors.

20. The apparatus according to Claim 19, **characterised in that** the guiding discs (14) are surrounded in the axial direction alternately by belts (11) of the pressing passage (7) and by belts (11) of the winding passage (8).

21. The apparatus according to Claim 19 or 20, **characterised in that** the two guiding discs (14), which respectively form one end of a row of guiding discs on the cross-over axis (15), are surrounded respectively by a belt (11) of the pressing passage (7).

22. The apparatus according to any of Claims 8 to 21, **characterised by** means for adjusting (19) the distance (20, 20a, 20b) between the pressing device (9) and/or the winding conveyor (23) on the one hand and the conveyance base (1) on the other hand.

23. The apparatus according to Claim 22, **characterised in that** the adjusting means (19) are made as height adjustment means connected or coupled to the pressing device (9) and/or the winding conveyor (23), the conveyance base (1) being held horizontally and/or stationarily.

24. The apparatus according to Claim 22 or 23, **characterised in that** the adjusting means (19) comprise at least one rack-and-pinion drive (26, 31, 32), a spindle-type lifting gear, other gearing means and/or eccentric adjustment.

25. The apparatus according to Claim 24, **characterised in that** the rack-and-pinion drive (26, 31, 32) has a rack and pinion (27) which on the one hand engages respectively on an adjustable machine frame (15a) or on a respectively assigned part of a multiple-part machine frame with parts (15a1, 15a2) adjustable in relation to one another and on the other hand cogs with a cog wheel (28) with the drive shaft (30) which is mounted with a stationarily running axis of rotation.

26. The apparatus according to Claim 25, **characterised in that** there are disposed on both sides of the machine frame (15a, 15a1, 15a2) two rack-and-pinion drives (26a, 26b; 31 a, 31 b; 32a, 32b) the cog wheels (28) of which are connected by a common drive shaft (30) which runs obliquely or transversely over or beneath the pressing or winding passage (7, 8).

27. The apparatus according to any of Claims 23 to 26, **characterised in that** a height adjustment device (19) is assigned to a respective drive shaft (13) and/or cross-over axis (15) of the pressing and/or winding passage (7, 8), and a moveable part (15a1, 15a2) of the machine frame (15a) is respectively assigned to the pressing and/or winding passage (7, 8).

28. The apparatus according to any of Claims 8 to 27, **characterised in that** an elastic conveying device (10) of the pressing passage (7) and/or a winding/conveying device (23) of the winding passage (8) run obliquely to the conveyance base (1).

29. The apparatus according to Claim 28, **characterised in that** the distance (20, 20a) of the elastic conveying device decreases as the proximity of the exit of the pressing passage (7) increases and/or the distance (20a, 20b) of the winding/conveying device (23) increases as the proximity to the exit of the winding passage (7) increases.

## Revendications

1. Procédé pour enrouler des morceaux de pâte (3) munis d'une garniture (6), en ce que le morceau de pâte (3) est déposé à plat sur un support d'acheminement (1) entraîné ou pouvant être entraîné mécaniquement, est muni de garniture (6) sur sa face supérieure, et est transporté au moyen du support d'acheminement (1) à travers un passage d'enroulement (8) dans lequel le morceau de pâte (3) est roulé et enroulé autour de la garniture (6), et dans lequel on utilise une garniture (6) d'une forme fixe et/ou déterminée, **caractérisé en ce qu'**en amont du passage d'enroulement (8), la garniture (6) est serrée directement sur la face supérieure du morceau de pâte (3) et/ou enfoncée directement dans cette face au moyen d'un dispositif presseur (9).

2. Procédé selon la revendication 1, **caractérisé par** l'utilisation d'une garniture (6) ayant une forme de base ronde ou ovale.

3. Procédé selon les revendications 1 ou 2, **caractérisé en ce que** la garniture (6) est déposée dans la moitié ou la région marginale (5) du morceau de pâte qui est en avant dans le sens du transport (2) par rapport aux autres régions marginales ou à l'autre moitié du morceau de pâte (3).

4. Procédé selon l'une des revendications précédentes, **caractérisé en ce qu'**avant le dépôt de la garniture (6) sur la face supérieure du morceau de pâte (3), cette face supérieure est mouillée avec de l'humidité ou avec un liquide.

5. Procédé selon l'une des revendications précédentes, **caractérisé en ce que** le morceau de pâte (3) muni de la garniture (6) est transporté au niveau du dispositif presseur (9) au moyen du support d'acheminement (1), la garniture (6) et le morceau de pâle (3) étant alors maintenus l'un par rapport à l'autre dans des positions relatives inchangées.

6. Procédé selon la revendication 5, **caractérisé en ce que** le dispositif presseur (9) est maintenu en position fixe.

7. Procédé selon l'une des revendications précédentes, **caractérisé par** l'utilisation d'un dispositif presseur et transporteur (10) disposé face au support d'acheminement (1) et ayant à peu près la même vitesse, le morceau de pâte (3) et la garniture (6) placée sur ce morceau étant respectivement maintenus en appui avec liaison par frottement contre ces deux éléments, le dispositif presseur et transporteur (10) étant pressé contre la garniture au moyen du dispositif presseur.

8. Dispositif d'enroulement pour morceaux de pâte (3) munis d'une garniture (6) solide et/ou d'une forme déterminée, destiné à la mise en oeuvre du procédé selon l'une des revendications précédentes, comprenant un support d'acheminement (1), en particulier une bande ou table transporteuse servant à acheminer les morceaux de pâte (3) vers un passage d'enroulement (8), dans lequel, en amont du passage d'enroulement (8), dans le sens du transport (2), est agencé un passage de pression (7) qui est formé par le support d'acheminement (1) et par un dispositif presseur opposé (9), le dispositif presseur (9) destiné à presser ou à serrer la garniture (6) directement sur ou dans la face supérieure du morceau de pâte (3) placé sur le support d'acheminement (1) étant disposé à une distance (20) du support d'acheminement (1) qui est calculée en fonction des dimensions de la garniture et de l'épaisseur (25) du morceau de pâte, **caractérisé en ce que** le passage de pression et le passage d'enroulement (7, 8) sont réalisés chacun avec un transporteur à bande ou un transporteur à courroie, ce dernier comprenant des courroies sans fin (11) qui s'étendent l'une à côté de l'autre selon un certain écartement, et à chacune desquelles est associé un moteur d'entraînement propre (16, 17) pour obtenir différentes vitesses de transport.

9. Dispositif selon la revendication 8, **caractérisé en ce que** le dispositif presseur (9) présente un dispositif presseur-transporteur élastique (10) et un élément de pression ou de soutien (22) qui maintient constante la distance (20) du dispositif presseur-transporteur (10) au support d'acheminement (1) qui lui fait face.

10. Dispositif selon la revendication 9, **caractérisé en ce que** l'élément de pression ou de soutien (22) est immobilisé en position fixe et/ou en appui glissant contre un côté du dispositif presseur et transporteur (10) qui est éloigné du support d'acheminement (1).

11. Dispositif selon les revendications 9 ou 10, **caractérisé en ce que** l'élément de pression ou d'appui (22) est constitué par une latte ou plaque rigide allongée dans la direction du transport (2) et disposée parallèlement au dispositif presseur et transporteur (10).

12. Dispositif selon l'une des revendications 9 à 11, **caractérisé en ce que** le dispositif presseur et transporteur (10) est réalisé sous la forme d'un transporteur à bande sans fin ou composé d'une pluralité de courroies sans fin (11) s'étendant les unes à côté des autres, espacées et élastiques, destinées à l'entraînement de la pâte et qui sont guidées autour d'une ou de plusieurs poulies de guidage (14) et/ou rouleaux de renvoi (13) en partie entraînés mécaniquement.

13. Dispositif selon la revendication 12, **caractérisé en ce que** le dispositif presseur et transporteur (10) présente un segment de pression (21) s'étendant entre deux éléments de renvoi (13, 14) et qui fait directement face au support d'acheminement (1) par son côté extérieur, l'élément de pression ou d'appui (22) étant en appui glissant ou avec possibilité de glissement contre le côté intérieur du segment de pression (21).

14. Dispositif selon l'une des revendications 8 à 13, **caractérisé en ce que** le passage d'enroulement (8) est disposé immédiatement à la suite du passage de pression (7).

15. Dispositif selon l'une des revendications 8 à 14, **caractérisé en ce que** le passage de pression (7) se prolonge en continu par le passage d'enroulement (8).

16. Dispositif selon l'une des revendications 8 à 15, **caractérisé en ce que** le support d'acheminement (1) s'étend aussi bien dans le passage de pression (7) que dans le passage d'enroulement (8).

17. Dispositif selon l'une des revendications 8 à 16, **caractérisé en ce qu'**au moins à l'entrée du passage de pression (7) et à la sortie du passage d'enroulement (8), le transporteur à bande et/ou le transporteur à courroie est ou sont muni(s) pour chacune de ses ou de leurs bandes ou courroies transporteuses (11) d'un rouleau d'entraînement et d'un rouleau de renvoi (13) qui sont respectivement couplés à un dispositif d'entraînement (13) réglable indépendamment.

18. Dispositif selon l'une des revendications 8 à 17, **caractérisé en ce que** le passage de pression (7) et le passage d'enroulement (8) sont réalisés au moyen de transporteurs à courroie qui se suivent, et **en ce que** les courroies (11) des deux transporteurs à courroie qui se suivent passent sur un axe de transition commun (15) qui est placé dans la région de transition entre le passage de pression et le passage d'enroulement (7, 8).

19. Dispositif selon la revendication 18, **caractérisé en ce que** plusieurs poulies de guidage (14) sont montées libres les unes derrière les autres sur le plan axial sur l'axe de transition (15) et sont entourées chacune par une des courroies sans fin (11) des deux transporteurs à courroie.

20. Dispositif selon la revendication 19, **caractérisé en ce que** les poulies de guidage (14) sont entourées en alternance, dans la direction axiale, par des courroies (11) du passage de pression (7) et par des courroies (11) du passage d'enroulement (8).

21. Dispositif selon la revendication 19 ou 20, **caractérisé en ce que** les deux poulies de guidage (14), qui forment chacune une extrémité d'une rangée de poulies de guidage sur l'axe de transition (15) sont entourées chacune par une courroie (11) du passage de pression (7).

22. Dispositif selon l'une des revendications 8 à 21, **caractérisé par** des moyens servant à régler (19) la distance (20, 20a, 20b) entre le dispositif presseur (9) et/ou le transporteur d'enroulement (23) d'une part et le support d'acheminement (1) d'autre part.

23. Dispositif selon la revendication 22, **caractérisé en ce que** les moyens de réglage (19) sont réalisés sous la forme de moyens de réglage en hauteur reliés ou couplés au dispositif presseur (9) et/ou au transporteur d'enroulement (23), tandis que le support d'acheminement (1) est maintenu horizontal et/ou stationnaire.

24. Dispositif selon la revendication 22 ou 23, **caractérisé en ce que** les moyens de réglage (19) comprennent au moins un entraînement à crémaillère (26, 31, 32), un mécanisme élévateur à vis, d'autres moyens mécaniques et/ou un réglage à excentrique.

25. Dispositif selon la revendication 24, **caractérisé en ce que** l'entraînement à crémaillère (26, 31, 32) comprend une crémaillère (27) qui, d'un côté, attaque un cadre de machine réglable (15a), ou une partie coordonnée d'un cadre de machine en plusieurs parties qui comprend des parties réglables les unes par rapport aux autres (15a1, 15a2) et qui, d'un autre côté, s'engrène par une roue dentée (28) avec un arbre d'entraînement (30) dont l'axe de rotation s'étend en position fixe.

26. Dispositif selon la revendication 25, **caractérisé en ce que** des deux côtés du cadre de machine (15a, 15a1, 15a2) sont disposés deux mécanismes à crémaillère (26a, 26b ; 31a ; 31b ; 32a ; 32b) dont les roues dentées (28) sont reliées par un arbre d'entraînement commun (30) qui s'étend obliquement ou transversalement au-dessus ou en dessous du passage de pression ou du passage d'enroulement (7, 8).

27. Dispositif selon l'une des revendications 23 à 26, **caractérisé en ce qu'**à chaque arbre d'entraînement (13) et/ou axe de transition (15) du passage de pression et/ou d'enroulement (7, 8) est associé un dispositif de réglage en hauteur (19) et/ou qu'à chaque passage de pression et/ou d'enroulement (7, 8) est associée une partie mobile (15a1, 15a2) du cadre de machine (15a).

28. Dispositif selon l'une des revendications 8 à 27, **caractérisé en ce qu'**un dispositif transporteur élastique (10) du passage de pression (7) et/ou un dispositif transporteur et d'enroulement (23) du passage d'enroulement (8) s'étendent obliquement par rapport au support d'acheminement (1).

29. Dispositif selon la revendication 28, **caractérisé en ce que** la distance (20, 20a) du dispositif transporteur élastique décroît avec l'accroissement de la proximité de la sortie du passage de pression (7) et/ou la distance (20a, 20b) du dispositif transporteur d'enroulement (23) croît avec l'accroissement de la proximité de la sortie du passage d'enroulement (7).
